# EUROPEAN PATENT SPECIFICATION

(11) **EP 3 083 212 B1**
(45) Date of publication and mention of the grant of the patent: **15.02.2023**
(21) Application number: 14815762.1
(22) Date of filing: 19.12.2014
(51) Int. Cl.: B29D 11/00, B33Y 10/00, B33Y 30/00, B29C 64/112, B29C 64/209

(54) **METHOD FOR PRINTING A THREE-DIMENSIONAL LIGHT-GUIDING STRUCTURE**
VERFAHREN ZUM DRUCKEN EINER DREIDIMENSIONALEN LICHTLEITENDEN STRUKTUR
PROCÉDÉ D'IMPRESSION D'UNE STRUCTURE TRIDIMENSIONNELLE DE GUIDAGE DE LUMIÈRE

(30) Priority: 20.12.2013 EP 13199248
(43) Date of publication of application: 26.10.2016
(73) Proprietor: Luxexcel Holding B.V., 5656 AE Eindhoven (NL)
(72) Inventor: VAN DE VRIE, Richard, NL-4471 NC Wolphaartsdijk (NL); BISKOP, Joris, NL-4381 BK Vlissingen (NL)
(74) Representative: Murgitroyd & Company
(86) International application number: PCT/EP2014/078861
(87) International publication number: WO 2015/092015

(56) References cited:
- EP-A1- 2 208 542
- US-A- 5 784 171
- US-A1- 2004 145 629
- US-A1- 2005 147 737
- US-A1- 2011 298 877

## Description

### BACKGROUND

The present invention relates to a method for printing a three-dimensional structure by depositing a plurality of droplets of printing material onto a substrate. A suchlike method is already known from the international patent application WO 2010 / 091 888 A1 and can be used for printing three-dimensional light-guiding structure, for instance. The printing time is a limiting factor of the known printing method because every single droplet has to be printed on its own. In order to optimize the printing time the print head ejecting the droplets of printing ink is moved over the substrates several times. A disadvantage of this purpose is that deviations in the absolute positional accuracy of the print head caused by movement changes accumulate and lead to increasing errors in droplet positions in the end of the printing progress. To circumvent this disadvantage the state of the art knows a method for printing a three-dimensional structure, wherein a plurality of droplets of printing material is deposited onto a substrate and the droplets are deposited in such a manner that layers of printing material are generated which are inclined with respect to a main plane of the substrate. Preferably a plurality of nozzle is used for generating layers that are inclined with respect to the main plane. Unfortunately, such a method leads to inaccuracies regarding the placing of the droplets because the distance that each droplet has to pass differs due the inclining structure of layer formed by the printing material deposited before. Relevant prior art documents include US 2005/147737 A1,

US 2004/145629 A1 and US 2011/298877 A1, wherein the latter discloses a method for printing optical structures on a substrate according to the preamble of claim 1.

### SUMMARY

It is therefore an object of the present invention to provide a method of printing a three-dimensional light-guiding structure, which realizes three-dimensional light-guiding structure comparatively fast, wherein the accuracy is improved compared to the state of the art, simultaneously.

The object is solved by a method according to claim 1.

It is herewith advantageously possible to reduce the distance between the nozzle and the substrate or the layer of printing material respectively. As a result the accuracy of depositing the droplets of printing material on the substrate is improved. Preferably it is provided that the droplets of printing material overcome the distance between the nozzle and the layer of printing material or the substrate respectively by dropping along a travel direction. Preferably the travel direction of the droplet is perpendicular to the printing direction. The printing direction represents the direction being parallel to the directional component of the movement of the nozzle that is parallel to the general course of the substrate. It is also possible that the layer formed by the printing material is shaped or structured and consequently the distance between the nozzle and the printing material varies along the printing direction. In contrast to the state of the art the present invention takes such structured or layers into account, wherein the distance between nozzle and layer/substrate is adapted along the printing direction. As a result the distance between the nozzle and the layer/substrate can be reduced. Especially printing a three-dimensional light-guiding structure according to the present invention is significantly improved, whenever an ejecting of the droplets by the nozzle is not total unidirectional and therefore each ejecting of the droplets leads to a slightly different travel direction compared to the travel direction of the previous ejected droplet. As a result of the slightly different travel directions the droplets may not be exactly disposed on the spot the droplet was intended for. Reducing the distance between nozzle and layer or substrate respectively advantageously limits such an effect and also reduces the possibility that the droplet is redirected by an external effect, like an airstream or breeze for example, during a travel of the droplet from the nozzle to the layer or the substrate respectively. It is also convincible that the substrate is structured or shaped along the printing direction and the arranging of at least one nozzle is adapted to the structure or shape of the substrate along the printing direction. It is also thinkable that the at least one nozzle is moved along the printing direction for depositing the droplets of printing material on the substrate or the layer respectively, wherein the nozzle is moved such that the distance between the layer or the substrate stays constant.

According to the present invention, it is provided that a plurality of nozzles are arranged along the printing direction.

Using a plurality of nozzles has the advantage that the three-dimensional light-guiding structure is created faster compared to the printing process using one nozzle. The only drawback of a printing process using a plurality of nozzles is the fact of typically creating a structured or shaped layer on the substrate. The arrangement of the nozzles anticipates and corrects the arrangement of the nozzle in order to guarantee that the distances between each nozzle of the plurality of nozzles and the layer or the substrate correspond each other. Consequently this embodiment of the present invention unify the advantages of a fast printing process by using a plurality of nozzles and an accurate depositing of the droplets on the substrate, advantageously.

According to the present invention, it is provided that the plurality of nozzles are moved along the printing direction while depositing the printing material onto the substrate. The advantage of moving the plurality of nozzles along the printing direction is that the printing material can be disposed over large areas on the substrate in a fast manner. In such a scenario using a plurality of nozzles has the effect that in some sections of the substrate more printing material is accumulated compared to other sections of the substrate, because some sections of the substrate are crossed by more nozzles than other sections. Consequently this leads to shaped or structured layer on the substrate, wherein the surface of the layer facing the nozzle is tilted with respect to the surface of the substrate. In particular the layers of printing material are inclined with respect to the general course of the substrate. The present invention takes this effect into account advantageously, wherein the the plurality of nozzles are arranged for compensating the different distances between nozzle and layer of printing material or substrate that would rise otherwise from the shaped or structured layer.

In another embodiment, it is provided that at least one nozzle is moveable in a direction perpendicular to the substrate and/or parallel to the printing direction, and wherein the at least one nozzle is adapted such that the distance between the at least one nozzle and
-- the layer of the printing material or
-- the substrate
   is mainly constant along the printing direction while depositing the printing material onto the substrate. In particular the nozzle may individually react to the structure of the layer and is moved in a direction perpendicular to the general course of the substrate and/ or parallel to the printing direction. It is also convincible that a sensor device detects the distance between the nozzle and the layer or the substrate and as a result of the detected distance the nozzle is moved. It is herewith advantageously possible to adapt the distance between nozzle and substrate or layer to the individual printing process that may depend on the velocity of the movement of the nozzle along the printing direction or the viscosity of the printing material that determinate the structure of the layer.

According to the present invention, it is provided that a printing head comprises a plurality of nozzles, wherein the plurality of nozzles are configured such that the droplets of printing material are deposited onto the substrate. In particular it is thinkable that the print head comprises an ink tank including the printing material. Using a print head has the advantage of a compact arrangement of the plurality of nozzle. It is thinkable that the nozzles are attached to the print head rigidly. It is also convincible that the nozzles are attached to the print head such that the nozzles can be rearranged to each other. Such a print head may be adapted to the individual printing process, advantageously.

According to the present invention, it is provided that the plurality of nozzles are moved while the print head is moved. Herewith it is advantageously possible to adapt at least one nozzle or the plurality of nozzles with respect to the distance to the layer or the substrate during process of depositing the droplets on the substrate. In particular such a print head can react to unforeseen structures or shapes of the layer.

According to the present invention, it is provided that the print head having a plurality of nozzles is tilted such that the nozzles of the plurality of nozzles are arranged along the printing direction such that the distance between each nozzle and the layer of the printing material and/or the substrate mainly correspond to each other respectively while depositing the printing material. Herewith it is advantageously possible to adapt the arrangement of the nozzle to such structured layers of printing material having surfaces that are inclined with respect to the general course of the substrate.

According to the present invention, it is provided that the printing head is rotatable about an axis perpendicular to the print direction and parallel to a main plane of the substrate, wherein the printing head is rotated such that the distance between each nozzle and the layer of the printing material or the substrate is constant while depositing the printing material on the substrate. It is herewith advantageously possible to adapt the arrangement of the nozzle with respect to the velocity of the movement of the print head and the viscosity. In particular it is thinkable that the orientation of print head is changed during the movement of the print head in order to taking into account the parts of the structured layers that are caused by an acceleration or deceleration of the print head, for instance. In particular it is convincible that the print head is accelerated or decelerated in the beginning and or in the end of the process of depositing the droplets on the substrate. In particular it is provided that at least one nozzle is pivotally mounted to the print head. As a result the nozzle may be re-orientated after the print head is tilted in order to guarantee that a nozzle opening faces the substrate or the layer properly, wherein the droplets of printing material are ejected through the nozzle opening.

According to another aspect of the present disclosure, it is provided that at least one nozzle is adjustable such that the distance between the nozzle and the layer of the printing material and/or the substrate can be changed during a manufacturing process of the three-dimensional light-guiding structure, wherein the manufacturing process comprises at least two movements across the substrate and wherein the nozzle is adjusted such that distance between the nozzle and the layer of the printing material and/or the substrate is constant while the manufacturing process of the three-dimensional light-guiding structure. Preferably the manufacturing process of the three-dimensional light-guiding structure comprises several scans of the nozzle or the print head over the substrate. As a result of depositing droplets of printing material in each scan on the substrate the body of the three-dimensional light-guiding structure grows in height. Keeping the distance between the nozzle and the layer or the substrate constant during the whole manufacturing process allows reducing the distance between the nozzle and the layer from the beginning of the manufacturing process. Therefore the accuracy of depositing the droplets of printing material on the substrate is improved, advantageously.

According to another embodiment, it is provided that
-- the nozzles are arranged staggered and/or
-- at least one nozzle comprises a structured nozzle opening. In particular it is also
thinkable that between one or more nozzle and the layer or the substrate an intermediate element is arranged, wherein the intermediate element is configured such that the printing material ejected along the printing direction travel the same distance till they reach their designation. In such a scenario the intermediate element defines the nozzle opening. Preferably the intermediate structure extends parallel to the surface of the structured layer. Moreover it is convincible that the intermediate element is exchangeable and is replaced for different printing processes. According to another embodiment, it is provided that the deposited droplets of printing material are cured by light. Herewith it is advantageously possible to cure the deposited droplets properly.

According to another embodiment, it is provided that a first nozzle starts ejecting droplets of printing material at the same time as a second nozzle starts ejecting droplets of printing material and/or the first nozzle starts ejecting droplets of printing material subsequently with respect to the ejecting of droplets of printing material by the second nozzle. According to this embodiment it is possible to manipulate the structured layer in its shape, advantageously. In particular it is provided that the arrangement of the nozzles and the start time of ejecting droplets from those nozzles are correlated to each other.

Another subject matter of the present disclosure is a print head wherein the print head comprises at least one nozzle, wherein the at least nozzle is adjustable such that the distance between the at least one nozzle and
- the layer of the printing material or
- the substrate
   is mainly constant along the printing direction while depositing the printing material onto the substrate Such a print head may be used for an accurate depositing of the printing material, advantageously.

According to another an aspect of the present disclosure, it is provided that the print head has a plurality of nozzles comprising a first nozzle and a second nozzle,
wherein the first nozzle are adjustable along a printing direction such that the distance between the first nozzle and
-- the layer of the printing material and/or
-- the substrate
   corresponds mainly to the distance between the second nozzle and
-- the layer of the printing material and/or
-- the substrate. Herewith it is advantageously possible to print a three dimensional as accurate and as fat as possible.

Another subject matter of the present disclosure is a print head for printing a three-dimensional light-guiding structure using one of the methods described above. Herewith a print head is realized, wherein the print head is able to perform the advantageous methods described above.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figures 1a, 1b and 1c** show a first exemplary embodiment of the present invention.
**Figures 2a, 2b and 2c** show a second exemplary embodiment of the present disclosure, not forming part of the present invention.
**Figure 3** shows an embodiment of a print head according to the present disclosure.
**Figure 4** shows a third exemplary embodiment of the present disclosure.

### DETAILED DESCRIPTION

The present invention will be descripted with respect to particular embodiments and with the reference to certain drawings but the invention is not limited thereto but only by the claims. The drawings described are only schematic and are non-limiting. In the drawings, the size of some elements may be exaggerated and not drawn on scale for illustrative purposes.

Where an indefinite or definite article is used when referring to a singular noun, e. G. "a","an", "the", this includes a plurals of the noun unless something else is specifically stated.

Furthermore, the terms first, second, third and the like in the description and in the claims are used to distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

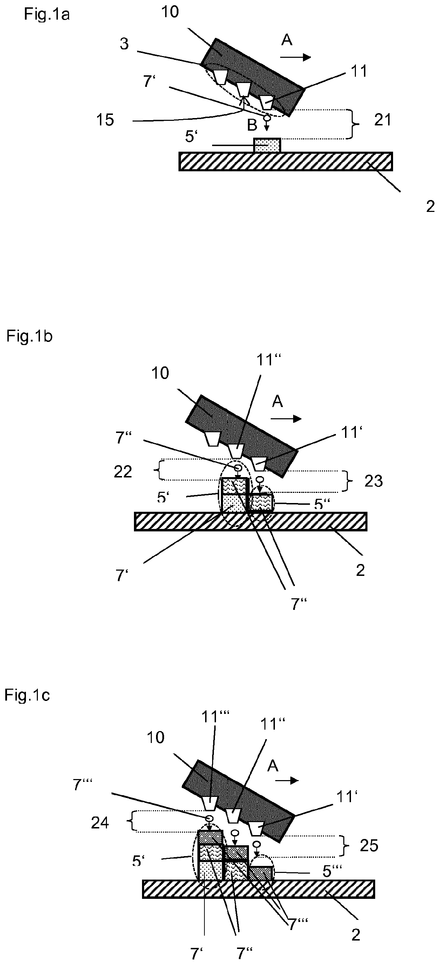

In **figure 1a, 1b and 1c** a first exemplary embodiment of the present invention is shown schematically based on three snapshots during the deposition of droplets 7 of printing material onto the substrate 2, wherein the depositing of the droplets 7 starts in figure 1a and is realized subsequently as it is shown in figure 1b and 1c. According to the first exemplary embodiment it is provided that the printing process of the three-dimensional light-guiding structure 100 starts by depositing a first plurality of droplets 7' of printing material on a substrate 2, wherein the substrate 2 comprises a main plane. Actually the main plane of the substrate 2 shown in figure 1 extends perpendicular to the plane of projection and therefore the main plane is not observable from the perspective chosen in figure 1. The droplets 7 of printing material are deposited onto the substrate 2 by using a plurality of nozzles 11. According to the first embodiment a print head 10 is provided, wherein the print head 10 is tilted with respect to the main plane of the substrate 2 and wherein the print head comprises three nozzles 11. The three nozzles 11 are attached to the printing head 10 such that each nozzle opening 15 of each nozzle faces the substrate, respectively. It is conceivable that at least one nozzle 11 is firmly attached to a body of the print head 10. It is also thinkable that at least one nozzle 11 is pivotally mounted to the print head 10, wherein the pivotally mounted nozzle 11 is readjusted by means of readjustment or by gravity automatically. Such a readjustment may be necessary in order to guarantee that the nozzle opening 15 faces the substrate 2 properly. Furthermore it is provided that the nozzles 11 are adjusted such that the distance between the substrate and the nozzle differs for each nozzle respectively before the manufacturing process of the three-dimensional light-guiding structure starts. According to the first exemplary embodiment a first nozzle 11' starts depositing the droplets, wherein depositing the droplets comprise the following steps: the droplet 7 of printing material is ejected through the nozzle opening 15, the droplet 7 of printing material falls along a travel direction B and the droplet 7 of printing material takes the place it is provided for. In particular the droplet 7 can be deposited onto the substrate 2 directly and/or onto a layer of printing material formed by printing material deposited on the substrate before the droplet 7 arrives its designation on the substrate 2. As a result a plurality of droplets deposited on the substrate forms a layer. For simplification a first plurality of droplets of printing material forming a first body is illustrated as an angular body. In reality such a first body is shaped more smoothly, because the droplets 7 of printing material spread due to their viscosity. In particular it is provided that the print head 10 comprising the three nozzles moves along a printing direction A. By the movement of the print head 10 along the printing direction the nozzles of the print head are arranged such that a second nozzle of the print head is located above the first body. This is presented in figure 1b illustrating a scenario while a second plurality of droplets is deposited onto the first body and/or the substrate. Because of the tilted print head, in particular the arrangement of the nozzles caused by tilting the print head, a first distance between second nozzle of the print head (in particular the nozzle opening) and the first body is equal to a second distance between the nozzle on the right sight and the substrate. Consequently a second layer of printing material covers the first body and the substrate such that the first body increases its height and a second body is realized. As a result of such an arrangement of the nozzles the droplets of the second plurality of droplets pass the same distance during their deposition regardless whether the droplet of the second plurality of droplets was ejected by the first or the second nozzle. This effect is also realized when the print head 10 continues its movement and a third plurality of droplets is deposited onto the substrate and onto the first and the second body formed by the first and the second plurality of droplets as it is shown in figure 1c. In particular it is provided that the print head 10 is moved along the printing direction A uniformly. Consequently the first plurality, the second plurality and the third plurality of droplets of printing material are typically indistinguishable in reality. In particular, a plurality of droplets of printing material comprises the first plurality, the second plurality and the third plurality of droplets of printing material, wherein the droplets of the plurality of droplets of printing material are deposited onto the droplets deposited before. In particular it is provided that each droplet of the plurality of droplets passes the same distance before their localization on the substrate. Preferably it is provided that the droplets of printing material are cured by light, in particular by UV-light. Especially it does not matter, whether the substrate is removed after printing the three-dimensional light-guiding structure or forms a part of the finished three-dimensional light-guiding structure. According to the first exemplary embodiment the nozzles are configured such that droplets of printing material are ejected by the nozzle subsequently with respect to each other. In a first alternative embodiment all the nozzles of the print head start ejecting droplets at the same time. In a second alternative embodiment the print head is pivotally mounted such that the print head can change its degree of tilt or inclination. In such a second embodiment it is possible that the tilt of the print head is adapted to the movement of the print head during the depositing the printing material. Particularly the tilt of the print head is adapted to the velocity of the print head during depositing the droplets of printing material. It is also thinkable that the print head is tilted during moving along the printing direction in order to correct discrepancies regarding the distances between the layer formed by printing material and each nozzle opening respectively. In particular it is thinkable that the distance between the layer and the nozzle opening is observed or controlled using a sensor device. In such a scenario it is possible to correct the tilt of the print head such that the distances between the present layer of printing material and each nozzle are again equalized respectively. Preferably at least one nozzle is pivotally mounted to the print head in order to correct its orientation as soon as the print head changes its tilt. It is also thinkable that the substrate is not flat and the print head is tilted during its movement in order to compensate the unevenness of the substrate.

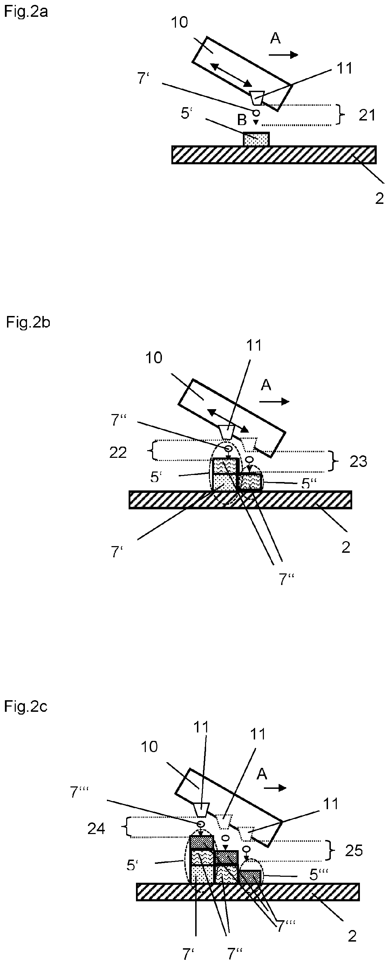

In **figure 2a, 2b and 2c** a second exemplary embodiment of the present disclosure not forming part of the present invention is shown schematically based on three snapshots during the deposition of droplets of printing material onto the substrate, wherein the depositing of the droplets starts in figure 2a and is realized subsequently as it is shown in figure 2b and 2c. In analogy to the first exemplary embodiment the print head is moved along a printing direction for printing a three-dimensional light-guiding structure. In contrast to the first exemplary embodiment the print head comprises a nozzle that is moveable in a direction parallel to the printing direction. Provided that the nozzle is moved faster than the print head during depositing the droplets, it is possible to replace a plurality of nozzle by one moveable nozzle. According to this second exemplary embodiment the nozzle is move along a guideway in order to guarantee that the distance between the layer of the printing material and the nozzle opening stays constant for each position of the movable nozzle relative to the print head during the depositing of the droplets. It is also convincible that the velocity of the moveable nozzle is adapted in dependency on the movement of the print head and/or the structure of the layer of printing material.

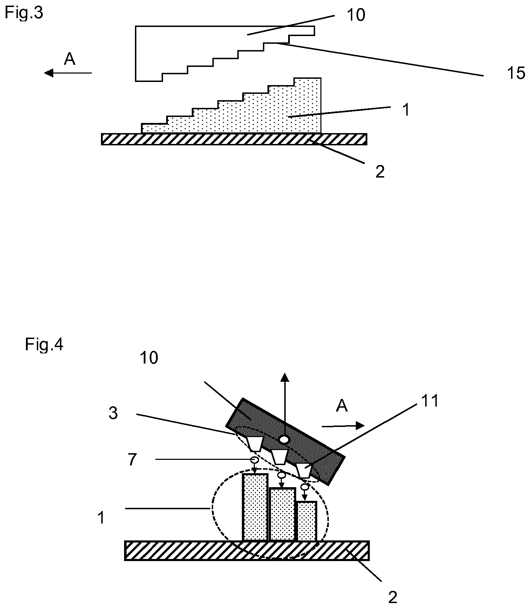

In **figure 3** an exemplary embodiment of a print head according to the present disclosure is shown. The print head is designed such that the outlets for ejecting the droplets of printing material are arranged staggered to each other. Such an embodiment of the print head may be realized by a plurality of nozzles arranged staggered respectively. It is also conceivable that the exemplary embodiment is realized by a nozzle having a structured nozzle opening, wherein the structured nozzle opening is structured such that distance between the layer of printing material and the nozzle opening is constant at every point of the nozzle opening. Such a structured nozzle opening may be realized by a structured strainer or another guiding system that is realized for guiding droplets before ejecting. In particular, it is provided that the print head is moved along the printing direction during depositing the droplets of printing material.

In **figure 4** a third exemplary embodiment of the present disclosure is shown. Next to the features of the print head illustrated in figure 1, the print head of figure 4 is moveable in a direction perpendicular to the main plane of the substrate. Using such a print head enables a method for printing a three-dimensional light-guiding structure, wherein the print head is moved across the substrate repeatedly. After each movement across the substrate the body of printing material increases. According to the third embodiment it is provided to adapt the position of the print head in height in order to guarantee that the distance between the layer of the printing material and the nozzle opening stays constant during the whole manufacturing process of the three-dimensional light-guiding structure, even for a manufacturing process of three-dimensional light-guiding structure comprising several repeated processes of depositing droplets. Consequently the distance between the layer and the nozzle can be adjusted as small as possible from the beginning of the manufacturing process and therefore the accuracy of depositing droplets is improved in a positive fashion. It is also conceivable that an individual nozzle of a plurality of nozzle is movable along a direction perpendicular to main plane of the substrate. Thus the individual nozzle may guarantee by moving along the direction perpendicular to the main plane of the substrate that the distance between the layer of printing material and the nozzle is constant mainly during depositing of the droplets. For example the individual nozzle is moved for fine-tuning of the distance between the layer and the nozzle opening. It is also thinkable that the individual nozzle will be moved, if the print head cannot be tilted for guaranteeing that the distance between the layer and the nozzle opening is constant for each nozzle.

### REFERENCE SIGNS

- 1: layer of printing material
- 2: substrate
- 3: plurality of nozzle
- 5': first body of printing material
- 5": second body of printing material
- 5‴: third body of printing material
- 7: droplet of a plurality of droplets of printing material
- 7': droplet of a first plurality of droplets of printing material
- 7": droplet of a second plurality of droplets of printing material
- 7‴: droplet of a third plurality of droplets of printing material
- 10: print head
- 11: nozzle
- 11': first nozzle
- 11": second nozzle
- 11‴: third nozzle
- 15: nozzle opening
- 21: distance between the first body of printing material and the first nozzle
- 22: distance between the first body of printing material and the second nozzle
- 23: distance between the second body of printing material and the first nozzle
- 24: distance between the first body of printing material and the first nozzle
- 25: distance between the third body of printing material and the first nozzle
- 100: three-dimensional light-guiding structure
- A: printing direction
- B: travel direction

## Claims

1. Method for printing a three-dimensional light-guiding structure (100) by depositing a plurality of droplets of printing material along a printing direction (A) onto a substrate (2), wherein the droplets of printing material (7) are deposited such that the droplets form a layer (1) of printing material on the substrate (2), wherein the droplets of printing material (7) are deposited by at least one nozzle (11) onto the substrate (2) and/or onto the layer (1) of printing material, wherein the at least one nozzle (11) is adjusted such that the distance between the at least one nozzle (11) and
-- the layer (1) of the printing material or
-- the substrate (2)
is mainly constant along the printing direction (A) while depositing the printing material onto the substrate (2), wherein the printing head (10) comprises a plurality of nozzles (3) arranged along the printing direction (A), wherein the plurality of nozzles (3) are configured such that the droplets (7) of printing material are deposited onto the substrate (2), wherein the plurality of nozzles (3) are moved during the movement of the printing head (10), wherein the printing head (10) is rotatable about an axis perpendicular to the printing direction (A) and parallel to a main plane of the substrate (2), **characterized in that** the printing head (10) is rotated such that the distance between each nozzle (11) and the layer (1) of the printing material or the substrate (2) corresponds to each other while depositing the printing material.

2. Method according to claim 1, wherein at least one nozzle (11) of the plurality of nozzles is moveable in a direction perpendicular to the substrate (2) and/or parallel to the printing direction (A), and wherein the at least one nozzle (11) is adapted such that the distance between the at least one nozzle (11) and
-- the layer (1) of the printing material or
-- the substrate (2)
is mainly constant along the printing direction while depositing the printing material onto the substrate (2).

3. Method according to one of the preceding claims, wherein
-- the nozzles (11) are arranged staggered and/or
-- at least one nozzle (11) of the plurality of nozzles comprises a structured nozzle opening (15).

4. Method according to one of the preceding claims, wherein the deposited droplets (7) of printing material are cured by light.

5. Method according to one of the preceding claims, wherein a first nozzle (11') of the plurality of nozzles starts ejecting droplets (7) of printing material at the same time as a second nozzle (11") of the plurality of nozzles starts ejecting droplets (7) of printing material or the first nozzle (11') starts ejecting droplets (7) of printing material subsequently with respect to the ejecting of droplets (7) of printing material by the second nozzle (11").

## Patentansprüche

1. Verfahren zum Drucken einer dreidimensionalen lichtleitenden Struktur (100) durch Absetzen einer Vielzahl von Tröpfchen des Druckmaterials entlang einer Druckrichtung (A) auf einem Substrat (2), wobei die Tröpfchen des Druckmaterials (7) so abgesetzt werden, dass die Tröpfchen eine Schicht (1) aus Druckmaterial auf dem Substrat (2) bilden, wobei die Tröpfchen aus Druckmaterial (7) durch mindestens eine Düse (11) auf dem Substrat (2) und/oder auf der Schicht (1) des Druckmaterials abgesetzt werden, wobei die mindestens eine Düse (11) so angepasst wird, dass der Abstand zwischen der mindestens einen Düse (11) und
- der Schicht (1) des Druckmaterials oder
- dem Substrat (2)
entlang der Druckrichtung (A) im Wesentlichen konstant gehalten wird, während das Druckmaterial auf dem Substrat (2) abgesetzt wird, wobei der Drucckopf (10) eine Vielzahl von Düsen (3) umfasst, die entlang der Druckrichtung (A) angeordnet sind, wobei die Vielzahl der Düsen (3) so ausgestaltet ist, dass die Tröpfchen (7) aus Druckmaterial auf dem Substrat (2) abgesetzt werden, wobei die Vielzahl der Düsen (3) während der Bewegung des Drucckopfes (10) bewegt wird, wobei der Druckkopf (10) um eine Achse senkrecht zu der Druckrichtung (A) und parallel zu einer Hauptebene des Substrats (2) rotierbar ist, **dadurch gekennzeichnet, dass** der Druckkopf (10) so rotiert wird, dass der Abstand zwischen jeder Düse (11) und der Schicht (1) aus Druckmaterial oder dem Substrat (2) einander entspricht, während das Druckmaterial abgesetzt wird.

2. Verfahren nach Anspruch 1, wobei mindestens eine Düse (11) der Vielzahl von Düsen in einer Richtung senkrecht zu dem Substrat (2) und/oder parallel zu der Druckrichtung (A) beweglich ist, und wobei die mindestens eine Düse (11) so eingerichtet ist, dass der Abstand zwischen der mindestens einen Düse (11) und
- der Schicht (1) des Druckmaterials oder
- dem Substrat (2)
entlang der Druckrichtung vorwiegend konstant gehalten wird, während das Druckmaterial auf dem Substrat (2) abgesetzt wird.

3. Verfahren nach einem der vorhergehenden Ansprüche, wobei
- die Düsen (11) gestaffelt angeordnet sind, und/oder
- mindestens eine Düse (11) der Vielzahl von Düsen eine strukturierte Düsenöffnung (15) umfasst.

4. Verfahren nach einem der vorhergehenden Ansprüche, wobei die abgesetzten Tröpfchen (7) aus Druckmaterial durch Licht gehärtet werden.

5. Verfahren nach einem der vorhergehenden Ansprüche, wobei eine erste Düse (11') der Vielzahl von Düsen mit dem Ausstoßen von Tröpfchen (7) aus Druckmaterial zur gleichen Zeit beginnt, wie eine zweite Düse (11") der Vielzahl von Düsen mit dem Ausstoßen von Tröpfchen (7) aus Druckmaterial beginnt, oder die erste Düse (11') mit dem Ausstoßen von Tröpfchen (7) aus Druckmaterial bezogen auf das Ausstoßen von Tröpfchen (7) aus Druckmaterial durch die zweite Düse (11") später beginnt.

## Revendications

1. Procédé d'impression d'une structure de guidage de la lumière tridimensionnelle (100) par dépôt d'une pluralité de gouttelettes de matériau d'impression le long d'une direction d'impression (A) sur un substrat (2), dans lequel les gouttelettes de matériau d'impression (7) sont déposées de telle sorte que les gouttelettes forment une couche (1) de matériau d'impression sur le substrat (2), dans lequel les gouttelettes de matériau d'impression (7) sont déposées par au moins une buse (11) sur le substrat (2) et/ou sur la couche (1) de matériau d'impression, dans lequel l'au moins une buse (11) est réglée de telle sorte que la distance entre l'au moins une buse (11) et
- la couche (1) du matériau d'impression ou
- le substrat (2)
est principalement constante le long de la direction d'impression (A) pendant le dépôt du matériau d'impression sur le substrat (2), dans lequel la tête d'impression (10) comprend une pluralité de buses (3) disposées le long de la direction d'impression (A), dans lequel la pluralité de buses (3) sont configurées de telle sorte que les gouttelettes (7) de matériau d'impression sont déposées sur le substrat (2), dans lequel la pluralité de buses (3) sont déplacées pendant le déplacement de la tête d'impression (10), dans lequel la tête d'impression (10) peut être tournée autour d'un axe perpendiculaire à la direction d'impression (A) et parallèle à un plan principal du substrat (2), **caractérisé en ce que** la tête d'impression (10) est tournée de telle sorte que la distance entre chaque buse (11) et la couche (1) du matériau d'impression ou le substrat (2) correspond à toutes les autres pendant le dépôt du matériau d'impression.

2. Procédé selon la revendication 1, dans lequel au moins une buse (11) de la pluralité de buses est déplaçable dans une direction perpendiculaire au substrat (2) et/ou parallèle à la direction d'impression (A), et dans lequel l'au moins une buse (11) est adaptée de telle sorte que la distance entre l'au moins une buse (11) et
- la couche (1) du matériau d'impression ou
- le substrat (2)
est principalement constante le long de la direction d'impression pendant le dépôt du matériau d'impression sur le substrat (2).

3. Procédé selon une des revendications précédentes, dans lequel
- les buses (11) sont disposées en quinconce et/ou
- au moins une buse (11) de la pluralité de buses comprend une ouverture de buse structurée (15).

4. Procédé selon une des revendications précédentes, dans lequel les gouttelettes déposées (7) de matériau d'impression sont durcies par la lumière.

5. Procédé selon une des revendications précédentes, dans lequel une première buse (11') de la pluralité de buses commence à éjecter des gouttelettes (7) de matériau d'impression en même temps qu'une deuxième buse (11") de la pluralité de buses commence à éjecter des gouttelettes (7) de matériau d'impression ou la première buse (11') commence à éjecter des gouttelettes (7) de matériau d'impression ultérieurement par rapport à l'éjection de gouttelettes (7) de matériau d'impression par la deuxième buse (11").
